# DEMANDE DE BREVET EUROPEEN

(11) **EP 0 939 542 A1**
(43) Date de publication de la demande: **01.09.1999**
(21) Numéro de dépôt: 99400406.7
(22) Date de dépôt: 19.02.1999
(51) Int. Cl.: H04N 1/00, H04N 1/107

(54) **Terminal portatif de réseau de radiocommunication intégrant un télécopieur**

(30) Priorité: 09.10.1998 FR 9812669; 25.02.1998 FR 9802276
(71) Demandeur: SAGEM SA, 75116 Paris (FR)
(72) Inventeur: Khun, Alex, 95430 Auvers Sur Oise (FR); Nicaise, Pierre, 60580 Coye La Foret (FR); Sabatier, Pierre, 95800 Cergy Saint Christophe (FR)
(74) Mandataire: Bloch, Gérard

(57) **Abrégé**

Le terminal portatif de réseau de radiocommunication comporte :
- des moyens d'analyse optique (5; 15; 25) agencés pour analyser un document de télécopie défilant, par déplacement relatif, devant lesdits moyens d'analyse (5) et/ou
- des moyens (6) d'impression d'une image de télécopie sur un support d'impression, défilant, par déplacement relatif, devant lesdits moyens d'impression (6),
- des moyens de gestion des moyens d'analyse (5) et des moyens d'impression (6), reliés à des moyens radio (11) de liaison avec le réseau et comprenant
- des moyens de repérage (7) des positions relatives entre, d'une part, les moyens d'analyse (5) et les moyens d'impression (6) et, d'autre part, le document et le support d'impression.

## Description

Les terminaux portatifs de radiocommunication permettent à leurs utilisateurs d'établir des communications vocales ou, simplement, de recevoir un court message, notifiant par exemple qu'il faut appeler par téléphone l'émetteur du message.

Cependant, le porteur d'un tel terminal ne dispose pas de toutes les facultés offertes à un abonné relié par fil au réseau téléphonique commuté, puisque ce porteur reste limité à des communications téléphoniques et ne peut en particulier échanger avec son correspondant des données graphiques, telles que télécopies.

La présente invention vise à permettre les échanges de données graphiques au moyen d'un terminal de réseau de radiotéléphonie dont le volume, ou la masse, restent limités, c'est-à-dire qui soit portatif.

A cet effet, l'invention concerne tout d'abord un terminal portatif de réseau de radiocommunication comportant :
- des moyens d'analyse optique agencés pour analyser un document de télécopie défilant, par déplacement relatif, devant lesdits moyens d'analyse,
- des moyens de gestion des moyens d'analyse reliés à des moyens radio de liaison avec le réseau et comprenant
- des moyens de repérage de la position relative entre les moyens d'analyse et le document.

Ainsi, le terminal selon l'invention permet de saisir et aussi d'émettre des télécopies, bien qu'il n'intègre, en plus des moyens radio classiques, qu'un minimum de moyens de télécopie, ce qui limite l'excédent de masse ou volume lié à ces derniers.

Avantageusement, le boîtier du terminal assure la saisie du document et comporte au moins une roulette d'appui et de guidage en défilement des moyens d'analyse devant le document de télécopie, et les moyens de repérage comportent un détecteur de mesure de la rotation de la roulette.

L'invention concerne aussi un terminal portatif de réseau de radiocommunication comportant :
- des moyens d'impression d'une image de télécopie sur un support d'impression, défilant, par déplacement relatif, devant lesdits moyens d'impression,
- des moyens de gestion des moyens d'impression, reliés à des moyens radio de liaison avec le réseau et comprenant
- des moyens de repérage de la position relative entre les moyens d'impression et le support d'impression.

Le terminal peut ainsi imprimer des télécopies reçues par radio.

Avantageusement, les moyens d'impression comportent une tête d'impression associée à un rouleau de contre-appui et il est prévu des moyens d'entraînement pour faire défiler le support d'impression entre la tête et le rouleau de contre-appui, les moyens d'entraînement comportant un moteur électrique et une source d'alimentation de celui-ci, montés fixes dans le terminal pour entraîner le rouleau de contre-appui et agencés pour servir d'axe support à un moyeu d'un rouleau de papier d'impression thermique.

Ainsi, le moteur, sa source d'alimentation et le rouleau de papier utilisent au mieux le volume disponible et on évite en outre la nécessité d'un support spécifique pour le moyeu.

L'invention concerne enfin un terminal portatif de réseau de radiocommunication comportant :
- des moyens d'analyse optique agencés pour analyser un document de télécopie défilant, par déplacement relatif, devant lesdits moyens d'analyse,
- des moyens d'impression d'une image de télécopie sur un support d'impression, défilant, par déplacement relatif, devant lesdits moyens d'impression,
- des moyens de gestion des moyens d'analyse et des moyens d'impression, reliés à des moyens radio de liaison avec le réseau, et comprenant
- des moyens de repérage des positions relatives entre, d'une part, les moyens d'analyse et les moyens d'impression et, d'autre part, le document et le support d'impression.

La demanderesse entend ainsi revendiquer tout terminal radio répondant au concept de l'invention, c'est-à-dire apte à saisir et/ou restituer des télécopies.

L'invention sera mieux comprise à l'aide de la description suivante de deux variantes de réalisation d'un terminal selon l'invention intégrant toutes les caractéristiques des trois types de terminaux revendiqués, en référence au dessin annexé sur lequel :
- la figure 1 est une vue de dos schématique du terminal dans l'une et l'autre des variantes pour illustrer l'orientation des éléments de télécopie par rapport au boîtier,
- la figure 2 est une vue en section latérale du terminal selon la première forme de réalisation, selon le plan II-II de la figure 1,
- la figure 3 est une vue en section latérale du terminal selon la seconde forme de réalisation, selon le plan II-II de la figure 1, et
- la figure 4 en est une section transversale selon le plan III-III de la figure 3.

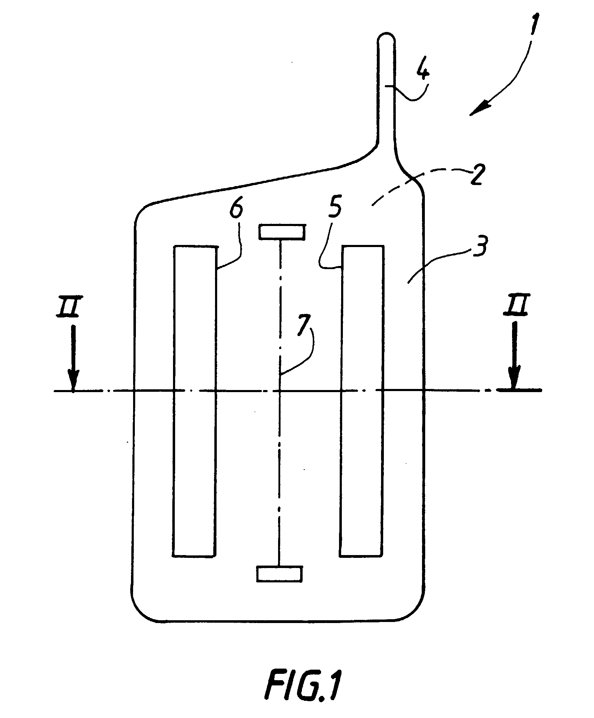

La figure 1 représente le boîtier 1 du terminal, vu de dos, c'est-à-dire la face 3 opposée à une face avant 2 d'interface utilisateur/réseau, face 2 qui porte un clavier de saisie de données, comme la numérotation téléphonique, ainsi qu'un écouteur et un microphone.

Le boîtier 1, allongé selon une forme sensiblement parallélépipédique rectangle, porte en bout une antenne 4 dont la direction d'extension est sensiblement celle d'extension maximale 7 du boîtier 1. Il a été dessiné une barrette 5 de capteurs optiques à contact, CIS, pour l'analyse optique point par point d'un document à saisir pour la télécopie, et une tête d'impression 6 de restitution de télécopies, ici une tête ligne, c'est-à-dire que, dans cet exemple, le terminal peut saisir optiquement des documents et peut restituer, ici imprimer, des télécopies. Le boîtier 1 a ainsi, d'un côté, un clavier de saisie de données et, de l'autre côté, la barrette d'analyse 5 et la tête 6.

La barrette 5 et la tête ligne 6 s'étendent parallèlement l'une à l'autre, selon sensiblement la direction d'un axe 7 portant une paire de roulettes et disposé entre la barrette 5 et la tête 6.

Ce choix, qui a été fait ici, de la direction d'extension des éléments 5 et 6 est motivé par le fait que ceux-ci peuvent s'étendre sur sensiblement toute la longueur du boîtier 1, ce qui permet de traiter des télécopies de largeur maximale. Ici, cette largeur est de 10,5 cm, ce qui correspond au format A6 (longueur 14,8 cm), ou encore à la moitié de la largeur du format A4, usuel. On peut donc saisir une page de format A4 en deux passes.

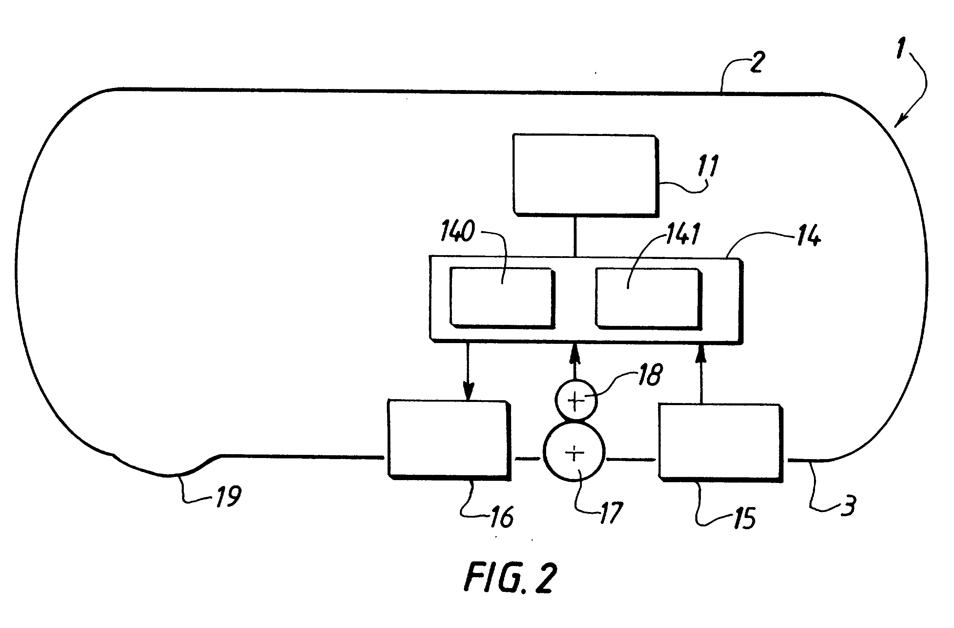

La figure 2 illustre la première variante. Celle-ci correspond à une réalisation très rudimentaire, c'est-à-dire impliquant un minimum d'éléments de télécopie.

Au niveau de la face arrière 3 d'interface télécopie sont montées la barrette CIS, ici référencée 15, et la tête thermique, ici référencée 16, toutes deux tournées vers l'extérieur du boîtier 1 et affleurant la face arrière 3. En outre, une roulette 17 du boîtier 1 est montée rotative sur un axe solidaire du boîtier 1 et parallèle à la direction d'extension 7 des éléments 15 et 16, exposée plus haut. La roulette 17 fait légèrement saillie de la face arrière 3 du boîtier 1 par une lumière ménagée dans celle-ci et située dans cet exemple entre la barrette 15 et la tête 16. Comme le montre la figure 2, les éléments 15, 16, 17 sont ici disposés près d'un bord latéral de la face 3 car, outre la roulette 17, il est prévu, près du bord opposé, un autre élément d'appui, ici un patin 19, pour appuyer le boîtier 1, par sa face arrière 3, contre un document à analyser optiquement ou une feuille à imprimer, posée par exemple sur une table.

La roulette 17 assure le guidage du boîtier 1 par rapport au document à saisir ou à la feuille à imprimer défilant, d'un mouvement relatif, devant les éléments 15 et 16 pour respectivement coopérer avec l'un d'eux.

Il peut être prévu que la roulette 17 soit axialement centrale. De préférence cependant, on prévoit au moins deux telles roulettes mais disposées latéralement aux extrémités du boîtier 1, avec éventuellement un détecteur de rotation différentielle entre elles pour corriger logiquement toute distorsion dans l'image saisie, ou bien encore un rouleau ayant l'extension des éléments 15 et 16. Il en est de même pour le patin 19.

Les quatre éléments 15, 16, 17, 19 sont montés de façon à ce que la barrette 15 et la tête 16 soient dans le plan, perpendiculaire à celui de la figure 2 et tangent au patin 19 et à la roulette 17, afin d'assurer la coopération voulue avec le document à analyser, supposé localement plan, et éventuellement supporté par un plan rigide, et avec la feuille à imprimer.

Un ensemble logique 14 de télécopie coordonne le fonctionnement des éléments 15 à 17. La roulette 17 est associée à une roue codeuse 18, qui mesure sa rotation et la communique à l'ensemble 14. Ce dernier est par ailleurs relié à un ensemble classique 11 de téléphonie radio, de liaison avec le réseau radio, pour les échanges de télécopies à travers ce réseau radio. Au niveau de la face avant 2, deux touches, 12 et 13, permettent de commander l'ensemble de télécopie 14 pour respectivement l'émission et la réception radio de télécopies à travers l'ensemble 11.

L'ensemble 14 comporte un microprocesseur de gestion 140, commandant une mémoire de télécopies 141 et comportant un logiciel pour la saisie et la restitution de télécopies ainsi que le protocole T30 de gestion des transmissions de télécopies. La batterie d'alimentation du terminal n'est pas représentée.

Le fonctionnement du terminal va maintenant être expliqué plus en détails.

La saisie optique d'un document s'effectue, en pratique, en faisant défiler manuellement la barrette CIS 15 devant, ici avec contact, le document, posé par exemple sur une surface plane rigide, c'est-à-dire que le boîtier 1 assure la saisie du document. L'ensemble de télécopie 14 est préalablement commandé, par une touche non représentée, pour saisir l'image du document. La roue codeuse 18 de la roulette 17, d'appui et de guidage du boîtier 1 sur le document, fournit en outre, à l'ensemble de télécopie 14, la position relative entre le boîtier 1, et plus précisément la barrette 15, et le document, pour ce qui concerne la direction de défilement du boîtier 1, c'est-à-dire la direction ici perpendiculaire à la direction d'extension des éléments 15, 16, 17 et sensiblement parallèle à la face arrière 3.

La roulette 17 asservit ainsi la vitesse de remplissage de la mémoire de télécopies de l'ensemble 14 afin de conserver une définition constante selon la direction de balayage. La roulette 17 et l'ensemble 14 forment donc un bloc de commande.

La restitution sur papier d'une télécopie par la tête 16, depuis la mémoire 141, suit le même principe que ci-dessus en ce qui concerne le défilement du boîtier 1 contre la feuille à imprimer.

L'émission d'une télécopie, à travers l'ensemble radio 11, s'effectue depuis la mémoire 141, préalablement remplie par la totalité des pages du document à émettre. Il peut cependant être prévu une émission au fil de l'eau, à mesure qu'une nouvelle page est analysée, en prévoyant une temporisation suffisante pour éviter un relâchement de la communication entre deux analyses optiques.

Pour encore limiter le volume de matériel, la barrette d'analyse 5 peut être prévue d'extension très réduite, par exemple 5 mm. Cette hauteur d'analyse correspond sensiblement à un interligne de texte et permet donc d'effectuer ligne par ligne l'analyse d'un document. Chaque ligne de caractères, que l'on qualifiera d'horizontale pour l'exposé, défile, depuis l'une de ses extrémités, devant le CCD 5 qui capte, à chaque position de défilement, un segment vertical ou colonne de pixels. Des circuits de l'ensemble 14 pilotés par un logiciel de recomposition d'image, effectuent ensuite une recomposition de l'image totale du document, en déterminant l'orientation générale de chaque ligne de caractères saisie, ou image partielle, et en faisant tourner électroniquement l'image de chaque ligne de caractères saisis pour l'aligner sur une horizontale de référence, avant d'accoler les images partielles des bandes. La détermination de la direction générale de la ligne de caractères saisis peut s'effectuer en recherchant, depuis chaque position de pixel d'une colonne quelconque, une ligne droite orientée de telle façon qu'elle soit tangente à un nombre maximal de caractères, c'est-à-dire en bas ou en haut de la plupart des caractères, en coupant donc uniquement les caractères débordant verticalement. La première ligne lue peut constituer la direction de référence. Un réalignement, sur une même verticale, des extrémités des lignes saisies peut être prévu à l'un des bords verticaux, gauche par exemple, de l'image restituée, dans la mesure où il s'agit d'une translation de correction horizontale limitée, ne risquant pas de supprimer des sauts de tabulation par exemple.

En outre, on peut prévoir, pour l'assemblage ou recomposition des bandes, de reconnaître une même portion d'image dans deux bandes adjacentes et de les corréler en déplaçant une bande par rapport à l'autre afin de les superposer pour restituer l'image globale. Dans le cas de grasphisme, l'utilisateur devra faire chevaucher les bandes d'analyse.

Il peut être prévu, sur la face avant 2 du boîtier, un écran de restitution d'une image, pour par exemple contrôler une image reçue par radio ou saisie localement. Dans ce dernier cas, l'écran, de préférence de technologie à cristaux liquides, LCD, restitue une zone de l'image totale. L'écran peut être limité à une zone ou bande de hauteur limitée à la largeur d'une barrette 5 réduite, ici 5 mm, et par exemple être alors disposé sur un flanc longitudinal du boîtier 1.

Il pourrait en particulier être prévu, en variante, de disposer la barrette d'analyse 5 et les éléments mécaniques associés sur le flanc longitudinal opposé du boîtier 1 et non plus sur la face arrière 3. L'écran, sur le flanc opposé ou sur la face avant 2, pourrait restituer l'image avec un grossissement, si bien que le terminal équivaudrait à une loupe, avec mémorisation à volonté des lignes lues.

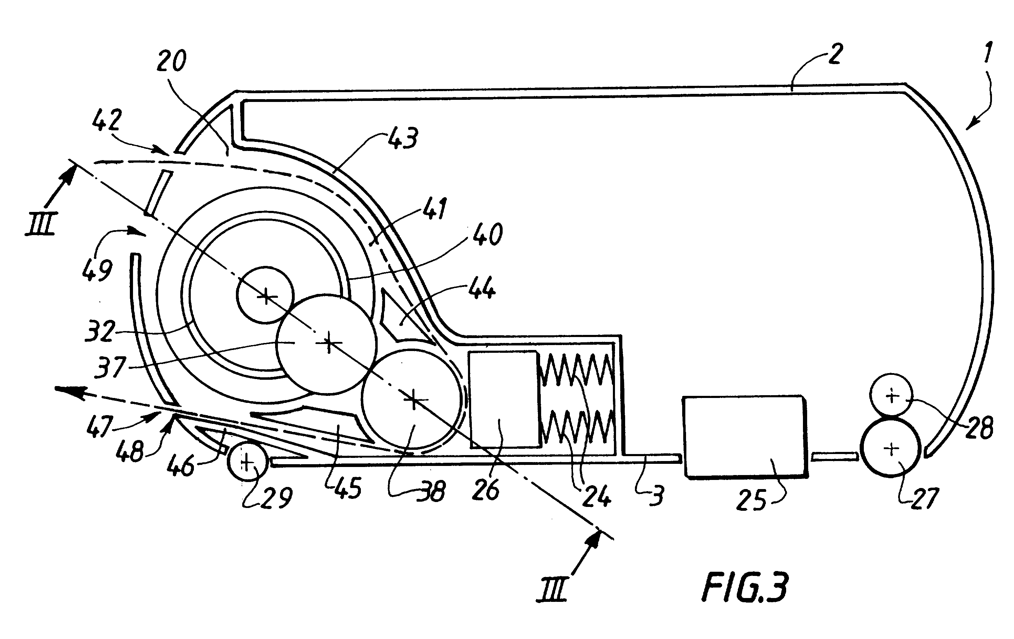

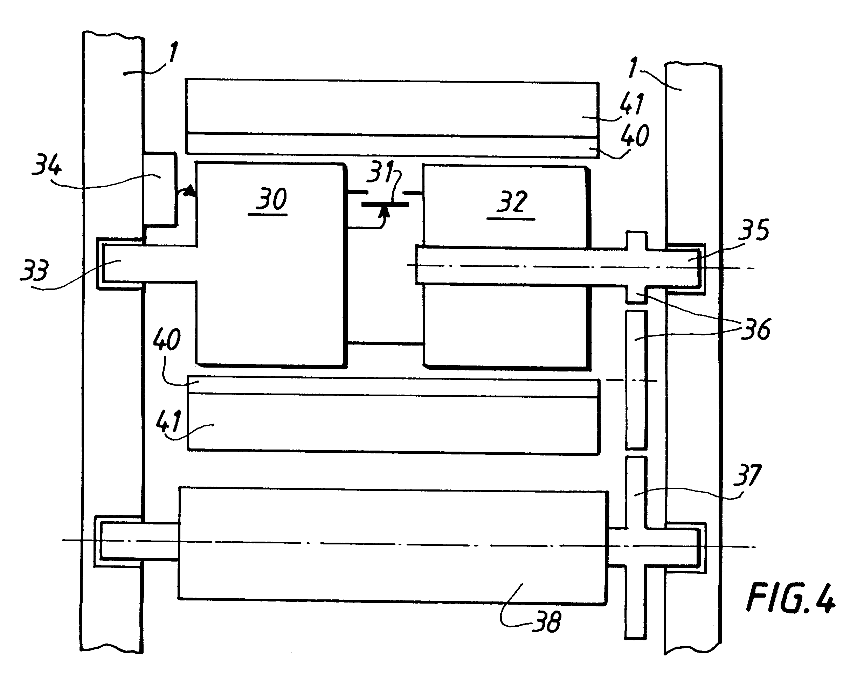

La seconde variante, des figures 3 et 4, diffère essentiellement de la première par le fait que la tête d'impression, référencée 26, est située dans un logement 20 en extrémité du boîtier 1 et coopère avec un rouleau 38 de contre-appui et d'entraînement de papier thermique en rouleau ou en feuille. Les éléments 15 et 18, inchangés, portent les références respectives 25, 28, la roulette 17 et le patin 19 étant remplacés par deux paires de roulettes 27 et 29.

Les circuits de commande 11 à 14 subsistent mais n'ont pas été représentés, dans un souci de clarté.

La tête d'impression, ici thermique, 26, est logée dans un renfoncement du logement 20, et est rappelée, par des ressorts 24 prenant appui sur la paroi du logement, vers, et même contre, le rouleau opposé de contre-appui 38.

Un moteur électrique 32, alimenté par une batterie 30 (voir fig. 4), entraîne en rotation le rouleau 38, à travers un engrenage 37 d'entraînement de celui-ci. La figure 4 est une représentation mécanique plus précise des entraînements que ne l'est la figure 3, qui n'est que schématique.

La batterie 30 et le moteur 32 sont logés dans un cylindre 40, ici en carton, formant moyeu pour porter un rouleau débiteur 41 de papier d'impression vierge, ici thermique. Une paroi 43 du logement 20 et un guidage opposé 44 guident le papier 41 depuis le moyeu 40 jusqu'à son passage entre la tête 26 et le rouleau de contre-appui 38; des parois de guidage 45 et 46 font de même en aval de la tête 26 jusqu'à une embouchure 47 de sortie du boîtier limitée d'un côté par une lèvre 48 présentant un bord externe tranchant et formant ainsi une lame de coupe transversale, ou coupe-papier, sur laquelle un utilisateur peut appliquer le papier imprimé pour le séparer du rouleau de papier vierge.

Une lumière 49, ménagée dans la paroi du boîtier 1 en regard du moyeu 40, permet de vérifier la présence de papier vierge.

Il est en outre prévu de pouvoir imprimer des feuilles successives de papier, si bien qu'une fente 42 de réception de telles feuilles est ménagée dans la paroi du boîtier 1, sensiblement dans le prolongement amont de la paroi de guidage 43. La ligne en pointillés avec flèche illustre le trajet d'une telle feuille.

Comme le montre la figure 4, la batterie 30 et le moteur 32 occupent sensiblement la section diamétrale que leur offre le moyeu 40 et, de façon non représentée, sont solidaires mécaniquement. On évite ainsi toute perte de volume utile. En outre, il n'a pas été prévu ici de moyens spécifiques formant axe de support du moyeu 40 car la batterie 30 et la carcasse du moteur 30 remplissent aussi cette fonction mécanique, en portant le moyeu 40 libre en rotation. L'ensemble batterie 30 moteur 32 est fixé à une extrémité axiale, de façon amovible, par un téton 33, de section ici carrée, coopérant avec un évidement de mêmes forme et taille du boîtier 1. Bien que la figure 4 illustre un cas pour lequel ce téton 33 est situé sur l'axe géométrique du moyeu 40 et du moteur 32, on comprendra que ce téton 33, ou tout autre moyen de fixation amovible, peut être situé à tout niveau de l'une des faces radiales d'extrémité, ou même exister sur les deux faces, puisqu'aucune rotation de la batterie 30 et de la carcasse du moteur 32 n'est prévue.

Le moteur 32 comporte un rotor dont le bout d'arbre 35 entraîne l'engrenage 37, comme indiqué plus haut, à travers ici un train d'engrenages 36. Le bout d'arbre 35 fait saillie par l'une des faces radiales évoquées ci-dessus, ici la face opposée à celle de fixation (33). Dans cet exemple, le bout d'arbre 35 sert aussi à éviter un porte-à-faux par rapport au téton 33, c'est-à-dire qu'il fait saillie par la face radiale opposée pour prendrè appui sur un palier ménagé dans la paroi du boîtier 1. Dans cet exemple, le moteur 32 étant axé sur l'axe du cylindre 40, le bout d'arbre 35 sort donc axialement par rapport au moyeu 40.

Un connecteur électrique 34, pouvant éventuellement servir de moyen de fixation en remplacement du téton 33, permet la commande d'un interrupteur 31, inséré entre la batterie 30 et le moteur 32, commande qui est effectuée au moyen d'une touche du boîtier 1. La batterie 30 alimente aussi le reste des circuits.

Le fonctionnement en impression va maintenant être précisé.

Le rouleau de papier 41 et son moyeu 40, consommables, sont initialement enfilés sur l'ensemble porteur 30, 32 provisoirement démonté à cet effet, puis remonté avec le papier, ceci à travers une trappe d'accès au logement, disposée à l'une des extrémités axiales de celui-ci. Un couvercle amovible peut, en variante, être prévu latéralement, (flanc gauche sur la fig. 3) entre les embouchures d'entrée 42 et de sortie 47.

Pour introduire le bord antérieur du rouleau de papier 41 entre la tête 26 et le rouleau de contre-appui 38, l'utilisateur pour faire reculer la tête 26 contre l'action des ressorts 24, c'est-à-dire qu'il peut manuellement commander le débrayage des ressorts 24 par compression de ceux-ci vers la paroi du logement, par exemple par action sur une plaquette faisant levier.

L'alimentation du moteur 32 par l'interrupteur 31 entraîne ensuite la rotation du rouleau 38 qui, pinçant le bord antérieur du papier déroulé, dévide le papier vierge 41 du moyeu 40. Lorsqu'une feuille a été imprimée, le moteur 32, commandé en fait à travers le microprocesseur de gestion 140, poursuit sa rotation de façon à fournir une surlongueur au moins égale à la distance séparant la tête 26 du coupe-papier aval 48. Comme indiqué, la batterie 30 et le moteur 32 forment un axe fixe portant, à faible frottement, le moyeu 40.

Dans une variante, le terminal est modulaire, c'est-à-dire que le logement 20, contenant le moteur 32, est situé dans une partie d'embout amovible du boîtier 1 avec un dispositif mécanique d'accrochage au reste du boîtier 1 et un connecteur électrique.

## Revendications

1. Terminal portatif de réseau de radiocommunication comportant :
- des moyens d'analyse optique (5; 15; 25) agencés pour analyser un document de télécopie défilant, par déplacement relatif, devant lesdits moyens d'analyse (5; 15; 25),
- des moyens (14, 17, 27) de gestion des moyens d'analyse (5; 15; 25) reliés à des moyens radio (11) de liaison avec le réseau et comprenant
- des moyens de repérage (17; 27) de la position relative entre les moyens d'analyse (5; 15; 25) et le document.

2. Terminal selon la revendication 1, dont le boîtier (1) assure la saisie du document et comporte au moins une roulette (17; 27) d'appui et de guidage en défilement des moyens d'analyse (15; 25) devant le document de télécopie, et les moyens de repérage comportent un détecteur (18; 28) de mesure de la rotation de la roulette (17, 27).

3. Terminal selon la revendication 2, dans lequel le détecteur comporte une roue codeuse (18; 28), entraînée par la roulette (17; 27), pour fournir les variations de position angulaire de celle-ci.

4. Terminal selon l'une des revendications 1 à 3, dans lequel le boîtier (1) comporte, d'un côté, un clavier de saisie de données et, de l'autre côté, les moyens d'analyse (5; 15; 25).

5. Terminal selon l'une des revendications 1 à 4, dans lequel les moyens d'analyse (15; 25) sont agencés pour analyser le document par bandes de lignes successives de caractères et les moyens de gestion (14, 17, 27) sont agencés pour recomposer l'image du document à partir des images des bandes.

6. Terminal selon la revendication 5, dans lequel les moyens de gestion (14) sont agencés pour corriger, dans une bande, l'inclinaison de l'image d'une ligne de caractères par rapport à une direction de référence.

7. Terminal selon l'une des revendications 1 à 6, dans lequel il est prévu des moyens d'affichage d'au moins une bande d'image analysée.

8. Terminal selon la revendication 7, dans lequel les moyens d'affichage sont disposés sur un flanc de boîtier (1) du terminal.

9. Terminal portatif de réseau de radiocommunication comportant :
- des moyens (6; 16; 26) d'impression d'une image de télécopie sur un support d'impression, défilant, par déplacement relatif, devant lesdits moyens d'impression (6; 16; 26),
- des moyens (14, 17, 27) de gestion des moyens d'impression (6; 16; 26), reliés à des moyens radio (11) de liaison avec le réseau et comprenant
- des moyens de repérage (17; 27) de la position relative entre les moyens d'impression (6; 16; 26) et le support d'impression.

10. Terminal selon la revendication 9, dont le boîtier (1) assure l'impression du support d'impression et comporte au moins une roulette (17; 27) d'appui et de guidage en défilement des moyens d'impression (6; 16; 26) devant le support d'impression et les moyens de repérage comportent un détecteur (18; 28) de mesure de la rotation de la roulette (17, 27).

11. Terminal selon l'une des revendications 9 et 10, dans lequel les moyens d'impression comportent une tête d'impression (16) qui affleure ladite face (3) d'interface télécopie et qui est agencée pour imprimer le support d'impression sous la commande du détecteur de rotation (18).

12. Terminal selon l'une des revendications 9 à 11, dans lequel les moyens d'impression comportent une tête d'impression (26) associée à un rouleau de contre-appui et il est prévu des moyens d'entraînement (30, 32, 37) pour faire défiler le support d'impression (41) entre la tête (26) et le rouleau de contre-appui (38).

13. Terminal selon la revendication 11, dans lequel les moyens d'entraînement comportent un moteur électrique (32) et une source (30) d'alimentation de celui-ci, montés fixes dans le terminal pour entraîner le rouleau de contre-appui (38) et agencés pour servir d'axe support à un moyeu (40) d'un rouleau de papier d'impression thermique (41).

14. Terminal selon la revendication 13, dans lequel une partie de boîtier du terminal comporte une fenêtre (49) de vérification de présence du papier d'impression (41).

15. Terminal selon l'une des revendications 12 à 14, dans lequel des moyens de guidage du support d'impression comportent, en aval de la tête (26), une lame coupe-papier (48).

16. Terminal selon l'une des revendications 12 à 15, dans lequel il est prévu des moyens débrayables (24) de rappel de la tête (26) contre le rouleau de contre-appui (38).

17. Terminal selon l'une des revendications 12 à 16, dans lequel il est prévu, en amont de la tête (26), des moyens de réception (42) et des moyens de guidage (43, 44) d'une feuille de papier à imprimer.

18. Terminal selon la revendication 17, dans lequel les moyens de guidage (43, 44) sont agencés pour aussi guider le papier du rouleau de papier d'impression.

19. Terminal portatif de réseau de radiocommunication comportant :
- des moyens d'analyse optique (5; 15; 25) agencés pour analyser un document de télécopie défilant, par déplacement relatif, devant lesdits moyens d'analyse (5; 15; 25),
- des moyens (6; 16; 26) d'impression d'une image de télécopie sur un support d'impression, défilant, par déplacement relatif, devant lesdits moyens d'impression (6; 16; 26),
- des moyens (14) de gestion des moyens d'analyse (5; 15; 25) et des moyens d'impression (6; 16; 26), reliés à des moyens radio (11) de liaison avec le réseau et comprenant
- des moyens de repérage (17; 27) des positions relatives entre, d'une part, les moyens d'analyse (5; 15; 25) et les moyens d'impression (6; 16; 26) et, d'autre part, le document et le support d'impression.

20. Terminal selon la revendication 19, dans lequel les moyens d'analyse (5; 15; 25) et les moyens d'impression (6; 16; 26) sont disposés à deux extrémités opposées d'une face (3) de boîtier du terminal, avec, entre eux, une roulette (7; 17; 27) des moyens de repérage.

21. Terminal selon l'une des revendications 19 et 20, dans lequel les moyens d'analyse (5; 15; 25) et les moyens d'impression (6; 16; 26) s'étendent selon une même direction (7) sensiblement parallèlement à une direction d'extension maximale de boîtier (1) du terminal.
